# EUROPEAN PATENT SPECIFICATION

(11) **EP 2 318 226 B1**
(45) Date of publication and mention of the grant of the patent: **01.02.2012**
(21) Application number: 08760520.0
(22) Date of filing: 04.06.2008
(51) Int. Cl.: B60J 10/04, B60J 10/00

(54) **SEALING STRIPS FOR VEHICLE WINDOWS**
DICHTUNGSLEISTEN FÜR FAHRZEUGFENSTER
BANDES D'ÉTANCHÉITÉ POUR FENÊTRES DE VÉHICULE

(43) Date of publication of application: 11.05.2011
(73) Proprietor: EMS-Patent AG, 7013 Domat/Ems (CH)
(72) Inventor: HATTA, Minoru, Funabashi-shi Chiba 273-0005 (JP); KAISSER, Michael, Suzhou, Jiangsu Province (CN); LAOUENAN, Pascal, F-78810 Feucherolles (FR); BAYER, Marcus, CH-7402 Bonaduz (CH); KÄGI, Werner, CH-7013 Domat/ems (CH); HALA, Ralf, 88161 Lindenberg (DE)
(74) Representative: OK pat AG
(86) International application number: PCT/EP2008/056940
(87) International publication number: WO 2009/146742

(56) References cited:
- EP-A- 0 046 002
- EP-A- 1 318 012
- WO-A-2007/087896
- FR-A- 2 098 030
- US-B1- 6 422 571

## Description

The invention relates to sealing strips for vehicle windows. Each of these sealing strips comprises at least one first, elastic layer made of a thermoplastic elastomer and a second, harder layer. The first layer is implemented to exert a sealing function between a construction element of a vehicle and a surface of a windowpane movable in relation to the sealing strip. The second layer is implemented as a visible cover for at least the largest, otherwise visible part of the first layer. The first and second layers are bonded to one another over essentially the entire length of the sealing strip.

Sealing strips for vehicle windows have been known for some time and ensure the seal of the junction of a windowpane to a construction element of the vehicle, so that environmental influences, such as rainwater, dirt, and/or wind may be kept out of the vehicle interior. Special requirements are placed in particular on sealing strips of movable windowpanes, whether these windows are displaceable exclusively linearly (vertically or horizontally), foldable, or movably nonlinearly (e.g., rotatable). These requirements comprise high elasticity and longevity of the seal elements, an appealing visual quality of the sealing strips, and a pronounced stability in relation to environmental influences. In connection with the present invention, all vehicles driven by motors, such as automobiles, trucks, locomotives, railway cars, and ships are referred to as vehicles. Without restricting the scope of the invention, however, only examples from the automobile industry are used for explaining the invention. All transparent, translucent, or opaque, flat or curved, essentially planar formations made of glass, plastic (e.g., polycarbonate or Plexiglas® = PMMA), or possibly metal (e.g., slides made of sheet metal) are referred to hereafter as movable windowpanes, if they are movable in any way in relation to at least one sealing strip.

A sealing strip of the generic type is known from US 6,422,571 B1 (cf. appended Figure 1). This sealing strip 1 for vehicle windows comprises a first, elastic layer 2 made of a thermoplastic elastomer, preferably EPDM rubber, and a second, harder layer 3 made of an ionomer. The elastic layer 2 is implemented to exert a sealing function between an external metal plate 4 in the door of an automobile and the surface 5 of a side windowpane 6 implemented as movable in relation to the sealing strip. The harder layer 3 is implemented as a visible cover for the elastic layer 2 and has a glossy surface. Both layers are molded around a carrier using co-extrusion and are therefore bonded to one another over essentially the entire length of the sealing strip.

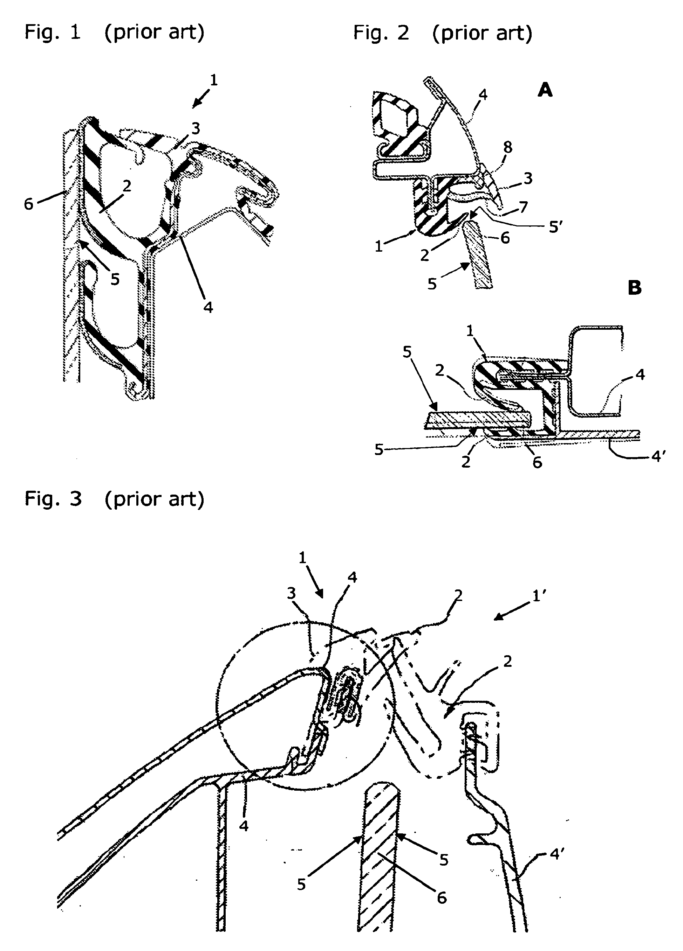

Further sealing strips for vehicle windows are known from DE 39 01 093 C2. A first sealing strip 1 (cf. appended Figure 2A) relates to the upper edge area of the windowpane 5 of a side door of an automobile and comprises a first elastic layer 2 and a second elastic layer 3. The elastic layers 2,3 are implemented to exert a seal function between the upper frame 4 of the car door and the surface 5 of a side windowpane 6 movable in relation to the sealing strip 1. The external sealing lip 3 is implemented as a visible, external cover for the internal sealing lip 2. Both sealing lips 2,3 are connected to one another via a softer rubber layer 7, which the surface 5' of the windowpane 6 abuts to form a seal in the closed state. In addition, this sealing strip comprises a retention lug 8 made of a harder rubber. This retention lug 8 holds the external sealing lip 3 at a specific distance to the sealing lip 2 and connects these two sealing lips to one another. A second sealing strip 1 (cf. appended Figure 2B) relates to the junction of the side door window 6 to the window frame 4 in the area of the B column of the automobile and comprises a first, elastic layer 2, which forms two sealing lips, which are connected to one another and form a channel. The windowpane 6 is raised and lowered essentially linearly in this channel between the two sealing lips 2, the two sealing lips 2 permanently impinging the surface 5 of the windowpane to form a seal. In this case, the external sealing lip 2 is covered by a structure 4' of the window frame 4. These sealing strips are preferably produced in a continuous casting or extrusion method.

Sealing strips for vehicle windows are also known from EP 1 826 050 A1. In contrast to US 6,422,571 B1, this document discloses an external sealing strip 1 and an internal sealing strip 1' in the area of the shaft opening in the automobile side door. The side windowpane 6 may be lowered completely into a window shaft concealed in the side door through this opening (cf. appended Figure 3). Both the external sealing strip 1 and also the internal sealing strip 1' comprise multiple sealing lips 2 made of an elastic material. These sealing lips 2 partially contact one another mutually when the windowpane is entirely lowered (cf. Figure 3). When the windowpane 6 is raised out of the shaft, the sealing lips 2 impinge the surfaces 5 of the windowpane 6. Both the external and also the internal sealing strip are fastened here to a construction element 4,4' in such a way that at least one sealing lip 2 of these two sealing strips 1,1' is always visible.

The object of the present invention comprises suggesting an alternative sealing strip for vehicle windows.

This object is achieved according to a first aspect by the features of independent Claim 1, in which a sealing strip for vehicle windows is suggested, which comprises at least one first, elastic layer made of a thermoplastic elastomer and one second, harder layer. The first layer is implemented to exert a sealing function between a construction element of a vehicle and a surface of a windowpane movable in relation to the sealing strip. The second layer is implemented as a visible cover for at least the largest, otherwise visible part of the first layer, the first layer and the second layer being bonded to one another over essentially the entire length of the sealing strip. The sealing strip according to the invention is characterized in that the second layer is made of a transparent or translucent polyamide.

This object is achieved according to a second aspect by the features of independent Claim 15, in which a use of thermoplastics for producing multilayer sealing strips for vehicle windows is suggested, sealing strips being produced which comprise:
(a) a first, elastic layer made of a thermoplastic elastomer, which is implemented to exert a sealing function between a construction element of a vehicle and a surface of the windowpane movable in relation to the sealing strip; and
(b) a second, harder layer which is implemented as a visible cover for at least the largest, otherwise visible part of the first layer,
the first layer and the second layer being bonded to one another over essentially the entire length of the sealing strip. The use according to the invention is characterized in that the second layer is made of a transparent or translucent polyamide.

Further features according to the invention and preferred embodiments of the invention result from the dependent claims.

Advantages of the sealing strip according to the invention comprise:
- The scratch resistance of the external surface is improved in relation to existing sealing strips made of plastic (e.g., having an external layer made of polypropylene).
- The production of a glossy external surface is simplified in relation to the prior art (cf. US 6,422,571 B1), because no extra layer (e.g., polyester film) is required for providing the preferably glossy and/or smooth external surface.
- By selecting special polyamides as the external layer, a very good UV protection may be achieved for the elastic parts of the sealing strip.
- Transparent or translucent polyamides used as the external layer offer high scratch resistance (e.g., in relation to washing brushes in a carwash) and a good resistance capability in relation to chemicals as are used in waxes and shampoos in the automobile industry, for example.
- Effect layers integrated in the sealing strip effectively laminate or respectively cover the elastic parts of the sealing strip and simultaneously improve the visual appearance.
- The polyamide external layer has a good ability to be colored. Elegant adjustment of the vehicle body color is thus possible, for example, whether it comprises a single-color lacquer or a metallic lacquer.

Sealing strips for vehicle windows known from the prior art and a selection of exemplary, preferred embodiments of the sealing strip according to the invention are schematically shown in the appended figures, without these figures restricting the scope of the invention. In the figures:
- Figure 1: shows a sealing strip known from US 6,422,571 B1 and shown in Figure 3 therein;
- Figure 2: shows two sealing strips known from DE 39 01 093 C2 and shown in Figures 3 and 5 therein;
- Figure 3: shows two sealing strips known from EP 1 826 050 A1 and shown in Figure 5 therein;
- Figure 4: shows a sealing strip according to the invention according to a first embodiment having a first, elastic layer made of a thermoplastic elastomer and a second, harder layer made of a transparent or translucent polyamide;
- Figure 5: shows a sealing strip according to the invention according to a second embodiment having an effect layer situated between a first, elastic layer made of a thermoplastic elastomer and a second, harder layer made of a transparent or translucent polyamide;
- Figure 6: shows a sealing strip according to the invention according to a third embodiment having a bonding agent layer situated between a first, elastic layer made of a thermoplastic elastomer and a second, harder layer made of a transparent or translucent polyamide;

- Figure 7: shows a sealing strip according to the invention according to a fourth embodiment having adhesive and effect layers situated between a first, elastic layer made of a thermoplastic elastomer and a second, harder layer made of a transparent or translucent polyamide.

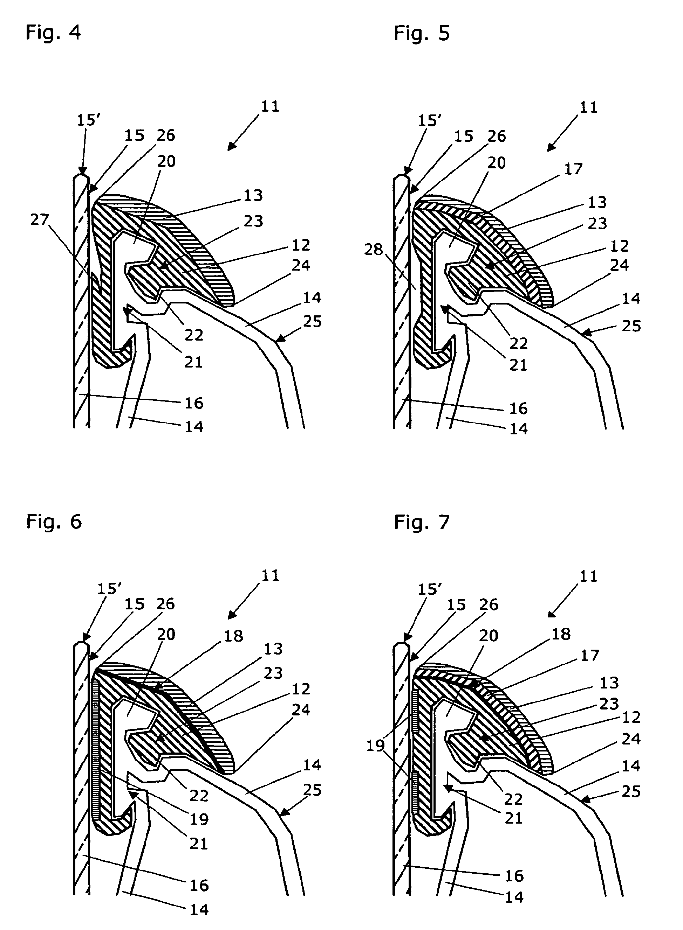

Figure 4 shows a sealing strip 11 according to a first embodiment of the invention having a first, elastic layer 12 made of a thermoplastic elastomer and a second, harder layer 13 made of a transparent or translucent polyamide. This sealing strip is fastened to a construction element 14 (e.g., to the sheet metal profile of a car door), which engages using a fastening relief 20 in a fastening groove 21 of the sealing strip 11. Instead of or in addition to this plugging of the sealing strip 11 on the construction element 14, a fastening relief 22 (e.g., an individual pin or a row of pins) of the sealing strip 11 may also engage in corresponding openings or depressions 23 of the construction element 14. The mutual or one-sided engagement with the construction element 14 is preferably formed using the first, elastic layer 12. This elastic layer 12 may also comprise sealing lips 27 which work together with the surface 15 of the windowpane 16 to form a seal.

The second, harder layer 13 is preferably implemented so that a first edge 24 of the mounted sealing strip 11 adjoins as close as possible to the surface 25 of the construction element 14, and that a second edge 26 is also located at a small distance to the surface 15 of the windowpane 16. It is thus ensured that this cover layer 13 protectively and practically completely covers the softer, elastic retention layer 12 of the sealing strip 11.

It is especially preferable for the cover layer 13 to be adapted in its shaping to the shape of the particular construction element 14 on which this sealing strip 11 is fastened, and/or to supplement this shape. This cover layer 13 preferably comprises effect pigments and/or colorants, so that a color adaptation to the particular construction element 14 may also be provided.

Figure 5 shows a sealing strip 11 according to a second embodiment of the invention having an effect layer 17 situated between a first, elastic layer 12 made of a thermoplastic elastomer and a second, harder layer 13 made of a transparent or translucent polyamide. This effect layer 17 covers the retention layer 12 made of a thermoplastic elastomer practically completely so that - even if the terminating cover layer 13 is manufactured from a transparent or translucent polyamide - the retention layer 12 is not externally visible. The appearance of the sealing strip 11 is thus essentially determined by the effect layer 17, which is in turn protected by the cover layer 13.

This effect layer 17 preferably comprises effect pigments and/or colorants so that a color adaptation to the particular construction element 17 may also be provided.

However, the effect layer 17 may also comprise a luminescence or phosphorescence layer or be implemented as such. In addition, the cover layer may comprise effect pigments and/or colorants and/or luminescent pigments, which - for example, depending on the current illumination situation - work together with the effect pigments and/or colorants of the effect layer. Instead of or in addition to sealing lips 27 (cf. Figure 4), setbacks 28 which reduce the friction area may also be provided between the surface 15 of the windowpane 16 and the first, elastic layer 12.

Figure 6 shows a sealing strip 11 according to a third embodiment of the invention having a bonding agent layer 18 situated between a first, elastic layer 12 made of a thermoplastic elastomer and a second, harder layer 13 made of a transparent or translucent polyamide. Otherwise, this embodiment corresponds extensively to the first embodiment (cf. Figure 4). In addition, the retention layer 12 may have a sliding friction reduction layer 19, which preferably extends over the entire contact area between the surface 15 of the windowpane 16 and the retention layer 12.

Figure 7 shows a sealing strip 11 according to a fourth embodiment of the invention having bonding agent layer 18 and effect layer 17 situated between a first, elastic layer 12 made of a thermoplastic elastomer and a second, harder layer 13 made of a transparent or translucent polyamide. This bonding agent layer 18 practically completely covers the retention layer 12 made of a thermoplastic elastomer. The effect layer 17 also covers the retention layer 12 and thus the bonding agent layer 18 practically completely, so that - even if the terminating cover layer 13 is manufactured from a transparent or translucent polyamide - the retention layer 12 is not externally visible. The appearance of the sealing strip 11 is thus essentially determined by the effect layer 17, which is in turn protected by the cover layer 13. This effect layer 17 preferably comprises effect pigments and/or colorants, so that a color adaptation to the particular construction element 14 may also be provided.

However, the effect layer 17 may also comprise a luminescence or phosphorescence layer or be implemented as such. In addition, the cover layer may comprise effect pigments and/or colorants and/or luminescent pigments, which - for example, depending on the current illumination situation - work together with the effect pigments and/or colorants of the effect layer. Instead of or in addition to sealing lips 27 (cf. Figure 4), sliding friction reduction layers 19 may also be provided between the surface 15 of the windowpane 16 and the first, elastic layer 12.

The sealing strips 11 according to the invention are preferably produced in an extrusion method, in particular a co-extrusion method. Alternatively, and particularly for producing geometrically complex shapes, for example, multicomponent injection molding methods may also be used. The lamination technique is also alternatively applicable.

In experiments, various variants of multilayer profiles according to the invention were produced on a co-extrusion system of the manufacturer NOKIA MAILLEFER. The multilayer die head was fed by corresponding extruders, which were charged with plastic material (granulate) provided for the corresponding layers. Granulates were melted in the extruders and conveyed as the melt to the corresponding channels of the die head. The continuously extruded multicomponent profile was cooled using typical devices and drawn off at a velocity of 5 m per minute. In following Table 1 having the materials used for three selected examples, the first layer corresponds to the elastomer layer 12, which faces toward the windowpane 16 in later use, while the opposing layer 13 made of transparent polyamide is visible later to observers.

**Table 1: Materials**

| **Layer** | **Example A** | **Example B** | **Example C** |
|---|---|---|---|
| **1** | Santoprene® | Santoprene® | Santoprene® |
| | 191-85PA | 191-85PA | 101-80 |
| **2** | Grilamid® TR 90 UV | Grilamid® TR 90 UV | Admer® QB 510 |
| | having 4 wt.-% MB | having 4 wt.-% MB | |
| | "Silver PA, class 1" | "Silver PA, class 1" | |
| **3** | - | Grilamid® TR 90 UV | Grilamid® TR 90 UV |
| | | | having 4 wt.-% MB |
| | | | "Silver PA, class 2" |
| **4** | - | - | Grilamid® TR 90 UV |

### Explanations of the materials follow.

In the three examples shown, a metallic pigment in the form of a masterbatch (abbreviation MB; as known to those skilled in the art, a concentrate of pigment particles dispersed in a polymer) was added in each case to the transparent polyamide for a layer to achieve an especially good visual appearance. It is to be noted here, however, that all embodiments having transparent or translucent polyamide without effect pigments and/or without additives are also according to the invention, of course. The three examples shown are therefore not to be understood as restrictive, but rather represent exemplary variants for 2, 3, and 4 layer constructions. In examples B and C (as specified in Table 1) a cover layer 13 made of the same transparent polyamide, but without effect pigments, was coextruded over the effect layer. The visual depth effect was thus reinforced and simultaneously a very smooth surface was achieved.

The metallic pigment masterbatches used, having the names "Silver PA, class 1" and "Silver PA, class 2" are concentrates of aluminum particles in a transparent polyamide.

The temperatures of the extruders selected for the examples according to the invention are specified for the materials of the corresponding layers in Table 2.

**Table 2: processing temperatures for the materials**

| **Layer** | **Example A** | **Example B** | **Example C** |
|---|---|---|---|
| **1** | 245 °C | 245 °C | 245 °C |
| **2** | 260 °C | 260 °C | 255 °C |
| **3** | - | 260 °C | 260 °C |
| **4** | - | - | 260 °C |

The two selected classes of metallic pigments resulted in different visual effects on the coextruded samples, namely a uniformly appearing coloration by fine aluminum powder of class 1 on one hand, which is very similar to a vehicle body coloring (in silver) and is intended as a lacquer substitute, and an increased optical depth effect by the use of somewhat coarser aluminum flakes of class 2 on the other hand.

Further explanations of the materials used in the examples and generally suitable for the invention now follow:

Grilamid® TR 90 (available from EMS-CHEMIE AG, Domat/Ems, Switzerland) is the transparent polyamide PA MACM 12. When followed by the additional identifier UV, this means that the corresponding polyamide molding compound additionally contains a UV stabilizer additive. More extensive explanations of the polyamides are appended below.

ADMER is a registered trade name of the Japanese company Mitsui for adhesion-modified polymers. Admer type QB 510 is a polypropylene grafted with maleic acid anhydride. A bonding agent layer 18 made of such a material or another suitable material is used as an intermediate layer if the selected thermoplastic elastomer and the polyamide do not adhere directly to one another (as in example C; cf. also Figure 6 and Figure 7).

SANTOPRENE is a registered trade name of the company Advanced Elastomer Systems for thermoplastic synthetic rubber. The normal types are a mixture or alloy of EPDM elastomer and polypropylene (vulcanized and/or cross-linked EPDM in a polypropylene (PP) matrix). These normal types include Santoprene 101-80 (cf. example C), which requires an intermediate layer made of a bonding agent material to adhere to polyamide. The Santoprene types which adhere directly to polyamide carry the additional identifier PA after the number, e.g., Santoprene 191-85PA in examples A and B. These adhesion-modified Santoprene-"PA" types preferably contain a certain proportion of polyamide (cf. also Figure 4 and Figure 5). The two-digit number directly before the "PA" in the type identification incidentally corresponds to the Shore hardness.

All thermoplastic elastomers come into consideration as components for the sealing strip 11 for vehicle windows according to the invention. In the present invention, under the expression "thermoplastic elastomer" there are understood all thermoplastically processible elastomer compositions, also those which contain cross-linked polymer particles, such as TPV (e.g. Santoprene). The thermoplastic elastomers are preferably selected from a group which comprises TPE-O or TPO (thermoplastic elastomers based on olefin, e.g., EPM or EPDM); TPE-V or TPV (thermoplastic vulcanized rubber comprising a cross-linked rubber in a thermoplastic olefin homopolymer or copolymer, this blend preferably being dynamically vulcanized (dynamically cured), and particularly being the mixture PP/vulcanized (cured) EPDM, e.g., of the Santoprene type); TPE-U or TPU (thermoplastic elastomers based on urethane, e.g., Desmopan); TPE-E or TPC (thermoplastic copolyester elastomers, e.g., Hytrel); TPE-S or TPS (styrene block copolymers, such as SBS, SEBS, SEPS, SEEPS, and MBS, e.g., Septon) and/or TPE-A or TPA (thermoplastic co-polyamide elastomers, e.g., PEBA). However, PP/vulcanized (cured) EPDM and SEBS are preferred, PP/vulcanized (cured) EPDM being especially preferred.

It is first to be noted on the polyamides (PA) or their nomenclature respectively that they are identified in accordance with the international standard according to the standard ISO 1874-1:1992(E). The standardized spellings for homopolyamides and co-polyamides (the latter with slashes between the component abbreviations) are explained in this standard. In addition, it contains the abbreviations for some monomers, which are abbreviated using letters instead of numbers (e.g., MACM etc.), on the last page. The abbreviation LC stands for lactam: e.g., LC12 means lactam 12, which is the same as laurin lactam. The number indicates the number of carbon atoms of the relevant monomer.

Linear aliphatic polyamides, such as PA 6, PA 66, mixtures made of PA 6 and PA 66, PA 610, PA 612, PA 1010, PA 11, PA 12, and CoPA 6/12 come into consideration as the translucent polyamides, which result in translucent or even transparent layers under suitable processing and/or cooling conditions and/or upon a selection of sufficiently thin layer thicknesses.

Transparent polyamides may be amorphous or microcrystalline. They are synthesized from aliphatic, cycloaliphatic, and/or aromatic monomers and comprise both homopolyamides and also co-polyamides. "Transparent polyamides", in connection with the present invention, also comprise, in addition to the amorphous polyamides, those polyamides which are no longer completely amorphous, but which are still transparent to the eye because of a microcrystalline structure having crystals which are smaller than the wavelength of light and are thus not visible to the naked eye. Transparent polyamides which are selected from a group which comprises the homopolyamides PA MACM 12, PA PACM 12, PA MACM 14, and PA PACM 14, the co-polyamides PA MACM/PACM 12, PA MACMI/12, PA MACMI/MACMT/12, PA MACM/PACM 14, PA MACM9/109, PA MACM10/1010, PA MACM12/1012, and PA MACM14/1014, and mixtures of the cited polyamides and mixtures with translucent polyamides are preferred. The transparent polyamides selected from the group PA MACM 12 and PA MACMI/MACMT/12 as well as mixtures thereof and mixtures with translucent polyamides are especially preferred. The polyamide PA MACM 12 is available under the trade name Grilamid^{®} TR 90 (as noted above), and a polyamide PA MACMI/MACMT/12 lying in the composition range of Claim 4 is available under the trade name Grilamid^{®} TR 60 from EMS-CHEMIE AG, Domat/Ems, Switzerland.

In connection with the present invention, "effect pigments" are defined as insoluble particles present in a polymer matrix. Depending on their type, size, and current concentration or distribution in a sealing strip according to the invention, such effect pigments at least partially reflect, scatter, or absorb the incident electromagnetic waves (in particular in the visible wavelength range, in the UV or IR and/or NIR ranges) or influence these waves in some way.

Phosphorescent objects are passive illumination systems, as are described *per se* under the title "Kunststoffe bringen Licht ins Dunkel [Plastics Bring Light into the Dark]" (Walfort & Wettstein; Technische Rundschau 19, 2006) as functional elements, which subsequently luminesce in the dark for hours after activation with light (physical procedure of the luminescence and/or phosphorescence). Luminescent pigments (e.g., based on strontium aluminate) are mixed into luminescent or afterglow plastics. Such phosphorescent plastic layers may (according to the specifications of RC Tritec AG, Teufen, Switzerland, cf. above-mentioned article in Technische Rundschau) be produced having low thicknesses and/or be introduced into an object using co-extrusion or multicomponent injection molding. Exemplary applications cited in the article are, *inter alia,* door handles, escape route systems, or luminescent covers of hiking water bottles, but no sealing strips and also no specific polymers are disclosed there.

A special variant of the present invention comprises equipping the transparent or translucent polyamide for the second layer of the sealing strip with luminescent pigments. The luminescent layer may be integrated in the sealing strip 11 as the effect layer or in combination with a further effect layer (e.g., cover layer 13 having luminescent pigment and effect layer 17 lying underneath having metallic pigment), the sealing strip preferably being produced by co-extrusion or multicomponent injection molding. Application of a luminescent and/or phosphorescent layer using lamination to an already produced second layer 13 and subsequent back-injection of a (possibly adhesion-modified) first elastomer layer 12 underneath is conceivable in spite of the greater work effort. However, during this back-injection process, at least one sliding friction reducing layer 19 may also be bonded to the sealing strip 11 to be produced.

Commercially available additives, such as stabilizers (e.g., heat and UV stabilizers and/or UV absorbers), impact modifiers, softeners, lubricants, coloring agents (colorants, color pigments), effect pigments, reinforcing agents, etc. may be admixed to the polyamides as needed, as long they do not interfere with the visual impression. UV stabilizers (in particular for improving the light stability in externally situated sealing strips), lubricants (for further increasing the scratch resistance), effect pigments (for achieving a high-quality appearance), and luminescent (phosphorescent) colorants and color pigments (for decorative or safety-relevant light effects in the dark) are especially preferred.

All examples listed display good adhesion of the layers to one another. The surface layer made of transparent polyamide is weather resistant and scratch resistant, and the visual appearance is very appealing and decorative, which is also advantageously reinforced by the action of effect, color, and/or metallic pigments and colorants.

Identical reference numerals indicate corresponding components and materials, even if they are not described in detail in every case.

### List of reference numerals:

### Prior Art

- 1: external sealing strip
- 1': internal sealing strip
- 2: first, elastic layer
- 3: second, harder layer
- 4,4': construction elements
- 5,5': surfaces of the windowpane
- 6: windowpane

### Invention

- 11: sealing strip
- 12: first, elastic layer; retention layer
- 13: second, harder layer; cover layer
- 14: construction element
- 15,15': surfaces of the windowpane
- 16: windowpane
- 17: effect layer
- 18: bonding agent layer
- 19: sliding friction reduction layer
- 20: fastening relief of 14
- 21: fastening groove of 11
- 22: fastening relief of 11
- 23: openings or depressions of 14
- 24: first edge of 11
- 25: surface of 14
- 26: second edge of 11
- 27: sealing lip
- 28: setbacks

## Claims

1. A sealing strip (11) for vehicle windows, which comprises at least one first, elastic layer (12) made of a thermoplastic elastomer and a second, harder layer (13), the first layer (12) being implemented to exert a sealing function between a construction element (14) of a vehicle and the surface (15,15') of a windowpane (16) movable in relation to the sealing strip (11) and the second layer (13) being implemented as a visible cover for at least the largest, otherwise visible part of the first layer (12), and the first layer (12) and the second layer (13) being bonded to one another over essentially the entire length of the sealing strip (11), **characterized in that** the second layer (13) is made of a transparent or translucent polyamide.

2. The sealing strip (11) according to Claim 1, **characterized in that** the polyamide is transparent and is selected from a group which comprises the homopolyamides PA MACM 12, PA PACM 12, PA MACM 14, and PA PACM 14, the co-polyamides PA MACM/PACM 12, PA MACMI/12, PA MACMI/MACMT/12, PA MACM/PACM 14, PA MACM9/109, PA MACM10/1010, PA MACM12/1012, and PA MACM14/1014, and mixtures of the cited polyamides and mixtures with translucent polyamides.

3. The sealing strip (11) according to Claim 2, **characterized in that** the transparent polyamide is selected from the group PA MACM 12 and PA MACMI/MACMT/12 as well as mixtures thereof and mixtures with translucent polyamides.

4. The sealing strip (11) according to Claim 3, **characterized in that** in the PA MACMI/MACMT/12, the MACMI component is in the range from 30 to 45 , the MACMT component is in the range from 30 to 45 weight percent, and the LC12 component is in the range from 40 to 10 weight percent, and the sum of these three components in the co-polyamide is 100 weight percent, total.

5. The sealing strip (11) according to Claim 1, **characterized in that** the polyamide is translucent and is selected from the group which comprises PA 6, PA 66, mixtures made of PA 6 and PA 66, PA 610, PA 612, PA 1010, PA 11, PA 12, and CoPA 6/12.

6. The sealing strip (11) according to one of the preceding claims, **characterized in that** the transparent or translucent polyamide is UV-stabilized and/or contains a lubricant.

7. The sealing strip (11) according to one of the preceding claims, **characterized in that** the thermoplastic elastomer is selected from a group which comprises TPO, TPV, TPU, TPC, TPS, and TPA, the thermoplastic elastomer preferably being PP vulcanized EPDM or SEBS.

8. The sealing strip (11) according to one of the preceding claims, **characterized in that** at least the first layer (12) or the second layer (13) is adhesion-modified.

9. The sealing strip (11) according to one of the preceding claims, **characterized in that** an effect layer (17) is situated between the first, elastic layer (12) made of a thermoplastic elastomer and the second, harder layer (13) made of a transparent or translucent polyamide.

10. The sealing strip (11) according to Claim 9, **characterized in that** the effect layer (17) comprises a transparent or translucent polyamide and pigments or colorants which are selected individually or in combination from a group which comprises effect, color, and metallic pigments, colorants, and luminescent pigments.

11. The sealing strip (11) according to one of the preceding claims, **characterized in that** a bonding agent layer (18) is situated between the first elastic layer (12) made of a thermoplastic elastomer and
(a) the second, harder layer (13) made of a transparent or translucent polyamide, or
(b) an effect layer (17).

12. The sealing strip (11) according to one of the preceding claims, **characterized in that** it is implemented as the internal or external shaft seal for side windows of a motor vehicle, in particular as an external window shaft seal on an automobile.

13. The sealing strip (11) according to one of the Claims 1 through 11, **characterized in that** the sealing strip is implemented as a seal for side windows on the upper window frame of a motor vehicle, in particular on an automobile.

14. The sealing strip (11) according to one of the Claims 1 through 11, **characterized in that** it is implemented as a running seal for side windows on lateral window frame parts of a motor vehicle, in particular of an automobile.

15. Use of thermoplastics for producing multilayer sealing strips (11) for vehicle windows, which comprise:
(a) a first, elastic layer (12) made of a thermoplastic elastomer, which is implemented to exert a sealing function between a construction element (14) of the vehicle and a surface (15,15') of a windowpane (16) movable in relation to the sealing strip (11); and
(b) a second, harder layer (13) which is implemented as a visible cover for at least the largest, otherwise visible part of the first layer (12),
the first layer (12) and the second layer (13) being bonded to one another over essentially the entire length of the sealing strip (11), and the use being **characterized in that** the second layer (13) is made of a transparent or translucent polyamide.

16. The use according to Claim 15, **characterized in that** an extrusion, injection molding, or lamination technology, preferably a co-extrusion technology or multicomponent injection molding technology is used to produce the sealing strips (11).

## Patentansprüche

1. Dichtungsleiste (11) für Fahrzeugfenster, die zumindest eine erste, elastische Schicht (12) aus einem thermoplastischen Elastomer und eine zweite, härtere Schicht (13) umfasst, wobei die erste Schicht (12) zum Ausüben einer Dichtfunktion zwischen einem Konstruktionselement (14) eines Fahrzeuges und einer Oberfläche (15,15') einer relativ zu der Dichtungsleiste (11) beweglichen Fensterscheibe (16) ausgebildet ist und die zweite Schicht (13) als sichtbare Abdeckung für zumindest den grössten, sonst sichtbaren Teil der ersten Schicht (12) ausgebildet ist, und wobei die erste Schicht (12) und die zweite Schicht (13) über im Wesentlichen die ganze Länge der Dichtungsleiste (11) miteinander verbunden sind, **dadurch gekennzeichnet, dass** die zweite Schicht (13) aus einem transparenten oder translucenten Polyamid gebildet ist.

2. Dichtungsleiste (11) gemäss Anspruch 1, **dadurch gekennzeichnet, dass** das Polyamid transparent und ausgewählt ist aus einer Gruppe, welche die Homopolyamide PA MACM 12, PA PACM 12, PA MACM 14 und PA PACM 14, die Copolyamide PA MACM/PACM 12, PA MACMI/12, PA MACMI/MACMT/12, PA MACM/PACM 14, PA MACM9/109, PA MACM10/1010, PA MACM12/1012 und PA MACM14/1014, sowie Mischungen der genannten Polyamide und Mischungen mit translucenten Polyamiden umfasst.

3. Dichtungsleiste (11) gemäss Anspruch 2, **dadurch gekennzeichnet, dass** das transparente Polyamid ausgewählt ist aus der Gruppe PA MACM 12 und PA MACMI/MACMT/12 sowie Mischungen derselben und Mischungen mit translucenten Polyamiden.

4. Dichtungsleiste (11) gemäss Anspruch 3, **dadurch gekennzeichnet, dass** im PA MACMI/MACMT/12 der MACMI-Anteil im Bereich von 30 bis 45 Gewichtsprozent, der MACMT-Anteil im Bereich von 30 bis 45 Gewichtsprozent und der LC12-Anteil im Bereich von 40 bis 10 Gewichtsprozent liegt, und wobei die Summe dieser drei Anteile im Copolyamid zusammen 100 Gewichtsprozent beträgt.

5. Dichtungsleiste (11) gemäss Anspruch 1, **dadurch gekennzeichnet, dass** das Polyamid translucent ist und ausgewählt ist aus der Gruppe, welche PA 6, PA 66, Mischungen aus PA 6 und PA 66, PA 610, PA 612, PA 1010, PA 11, PA 12 und CoPA 6/12 umfasst.

6. Dichtungsleiste (11) gemäss einem der vorhergehenden Ansprüche, **dadurch gekennzeichnet, dass** das transparente oder translucente Polyamid UV-stabilisiert ist und/oder ein Gleitmittel enthält.

7. Dichtungsleiste (11) gemäss einem der vorhergehenden Ansprüche, **dadurch gekennzeichnet, dass** das thermoplastische Elastomer ausgewählt ist aus einer Gruppe, welche TPO, TPV, TPU, TPC, TPS und TPA umfasst, wobei das thermoplastische Elastomer vorzugsweise PP/vulkanisiertes EPDM oder SEBS ist.

8. Dichtungsleiste (11) gemäss einem der vorhergehenden Ansprüche, **dadurch gekennzeichnet, dass** zumindest die erste Schicht (12) oder die zweite Schicht (13) haftungsmodifiziert ist.

9. Dichtungsleiste (11) gemäss einem der vorhergehenden Ansprüche, **dadurch gekennzeichnet, dass** zwischen der ersten, elastischen Schicht (12) aus einem thermoplastischen Elastomer und der zweiten, härteren Schicht (13) aus einem transparenten oder translucenten Polyamid eine Effektschicht (17) angeordnet ist.

10. Dichtungsleiste (11) gemäss Anspruch 9, **dadurch gekennzeichnet, dass** die Effektschicht (17) ein transparentes oder translucentes Polyamid und Pigmente oder Farbmittel umfasst, welche einzeln oder in Kombination ausgewählt sind aus einer Gruppe, die Effekt-, Farb-, und Metallicpigmente, Farbstoffe und Nachleuchtpigmente umfasst.

11. Dichtungsleiste (11) gemäss einem der vorhergehenden Ansprüche, **dadurch gekennzeichnet, dass** zwischen der ersten, elastischen Schicht (12) aus einem thermoplastischen Elastomer und
(a) der zweiten, härteren Schicht (13) aus einem transparenten oder translucenten Polyamid, oder
(b) einer Effektschicht (17)
eine Haftvermittlerschicht (18) angeordnet ist.

12. Dichtungsleiste (11) gemäss einem der vorhergehenden Ansprüche, **dadurch gekennzeichnet, dass** sie als innere oder äussere Schachtabdichtung für Seitenfenster eines Kraftfahrzeugs, insbesondere als eine äussere Fensterschachtabdichtung an einem Automobil, ausgebildet ist.

13. Dichtungsleiste (11) gemäss einem der Ansprüche 1 bis 11, **dadurch gekennzeichnet, dass** die Dichtungsleiste als Abdichtung für Seitenfenster am oberen Fensterrahmen eines Kraftfahrzeugs, insbesondere an einem Automobil, ausgebildet ist.

14. Dichtungsleiste (11) gemäss einem der Ansprüche 1 bis 11, **dadurch gekennzeichnet, dass** sie als Laufdichtung für Seitenfenster an seitlichen Fensterrahmenteilen eines Kraftfahrzeugs, insbesondere eines Automobils, ausgebildet ist.

15. Verwendung von thermoplastischen Kunststoffen zur Herstellung von mehrschichtigen Dichtungsleisten (11) für Fahrzeugfenster, die umfassen:
(a) eine erste, elastische Schicht (12) aus einem thermoplastischen Elastomer, die zum Ausüben einer Dichtfunktion zwischen einem Konstruktionselement (14) eines Fahrzeuges und einer Oberfläche (15,15') einer relativ zu der Dichtungsleiste (11) beweglichen Fensterscheibe (16) ausgebildet ist; und
(b) eine zweite, härtere Schicht (13), die als sichtbare Abdeckung für zumindest den grössten, sonst sichtbaren Teil der ersten Schicht (12) ausgebildet ist,
wobei die erste Schicht (12) und die zweite Schicht (13) über im Wesentlichen die ganze Länge der Dichtungsleiste (11) miteinander verbunden werden, und wobei die Verwendung **dadurch gekennzeichnet ist, dass** die zweite Schicht (13) aus einem transparenten oder translucenten Polyamid gebildet wird.

16. Verwendung gemäss Anspruch 15, **dadurch gekennzeichnet, dass** zur Herstellung der Dichtungsleisten (11) eine Extrusions-, Spritzguss- oder Laminiertechnik, vorzugsweise eine Co-Extrusionstechnik oder Mehrkomponentenspritzgusstechnik, verwendet wird.

## Revendications

1. Bande d'étanchéité (11) pour fenêtres de véhicule, comprenant au moins une première couche élastique (12) constituée d'un élastomère thermoplastique et une seconde couche plus dure (13), la première couche (12) étant mise en oeuvre pour exercer une fonction d'étanchéité entre un élément de construction (14) d'un véhicule et la surface (15,15') d'une vitre (16) mobile par rapport à la bande d'étanchéité (11) et la seconde couche (13) étant mise en oeuvre sous la forme d'un recouvrement visible pour au moins la partie la plus grande, sinon la partie visible, de la première couche (12), et la première couche (12) et la seconde couche (13) étant collées l'une à l'autre sur pratiquement toute la longueur de la bande d'étanchéité (11), **caractérisée en ce que** la seconde couche (13) est constituée d'un polyamide transparent ou translucide.

2. Bande d'étanchéité (11) selon la revendication 1, **caractérisée en ce que** le polyamide est transparent et choisi parmi un groupe qui comprend les homopolyamides PA MACM 12, PA PACM 12, PA MACM 14 et PA PACM 14, les copolyamides PA MACM/PACM 12, PA MACMI/12, PA MACMI/MACMT/12, PA MACM/PACM 14, PA MACM9/109, PA MACM10/1010, PA MACM12/1012 et PA MACM14/1014, ainsi que des mélanges des polyamides cités et des mélanges avec des polyamides translucides.

3. Bande d'étanchéité (11) selon la revendication 2, **caractérisée en ce que** le polyamide transparent est choisi parmi le groupe PA MACM 12 et PA MACMI/MACMT/12 ainsi que des mélanges de ceux-ci et des mélanges avec des polyamides translucides.

4. Bande d'étanchéité (11) selon la revendication 3, **caractérisée en ce que** dans le PA MACMI/MACMT/12, le composant MACMI se situe dans la plage allant de 30 à 45 pour cent en poids, le composant MACMT se situe dans la plage allant de 30 à 45 pour cent en poids et le composant LC12 se situe dans la plage allant de 40 à 10 pour cent en poids, et la somme de ces trois composants dans le copolyamide correspond à 100 pour cent en poids du poids total.

5. Bande d'étanchéité (11) selon la revendication 1, **caractérisée en ce que** le polyamide est translucide et choisi parmi le groupe qui comprend PA 6, PA 66, des mélanges constitués de PA 6 et PA 66, PA 610, PA 612, PA 1010, PA 11, PA 12 et CoPA 6/12.

6. Bande d'étanchéité (11) selon l'une des revendications précédentes, **caractérisée en ce que** le polyamide transparent ou translucide est stabilisé aux UV et/ou contient un lubrifiant.

7. Bande d'étanchéité (11) selon l'une des revendications précédentes, **caractérisée en ce que** l'élastomère thermoplastique est choisi parmi un groupe qui comprend TPO, TPV, TPU, TPC, TPS et TPA, l'élastomère thermoplastique étant de préférence PP/EPDM vulcanisé ou SEBS.

8. Bande d'étanchéité (11) selon l'une des revendications précédentes, **caractérisée en ce qu'**au moins la première couche (12) ou la seconde couche (13) est modifiée en adhérence.

9. Bande d'étanchéité (11) selon l'une des revendications précédentes, **caractérisée en ce qu'**une couche à effet (17) est située entre la première couche élastique (12) constituée d'un élastomère thermoplastique et la seconde couche plus dure (13) constituée d'un polyamide transparent ou translucide.

10. Bande d'étanchéité (11) selon la revendication 9, **caractérisée en ce que** la couche à effet (17) comprend un polyamide transparent ou translucide et des pigments ou des colorants qui sont choisis individuellement ou en combinaison à partir d'un groupe qui comprend des pigments à effet, colorés et métalliques, des colorants et des pigments luminescents.

11. Bande d'étanchéité (11) selon l'une des revendications précédentes, **caractérisée en ce qu'**une couche d'agent de liaison (18) est située entre la première couche élastique (12) constituée d'un élastomère thermoplastique et
(a) la seconde couche plus dure (13) constituée d'un polyamide transparent ou translucide, ou
(b) une couche à effet (17).

12. Bande d'étanchéité (11) selon l'une des revendications précédentes, **caractérisée en ce qu'**elle est mise en oeuvre sous la forme du joint de puits intérieur ou extérieur pour des fenêtres latérales d'un véhicule à moteur, en particulier sous la forme d'un joint de puits de fenêtre extérieur sur une automobile.

13. Bande d'étanchéité (11) selon l'une des revendications 1 à 11, **caractérisée en ce que** la bande d'étanchéité est mise en oeuvre sous la forme d'un joint pour des fenêtres latérales sur le cadre de fenêtre supérieur d'un véhicule à moteur, en particulier sur une automobile.

14. Bande d'étanchéité (11) selon l'une des revendications 1 à 11, **caractérisée en ce qu'**elle est mise en oeuvre sous la forme d'un joint pour des fenêtres latérales sur des parties de cadre de fenêtre latérale d'un véhicule à moteur, en particulier d'une automobile.

15. Utilisation de thermoplastique pour produire des bandes d'étanchéité multicouches (11) pour fenêtres de véhicules, qui comprennent :
(a) une première couche élastique (12) constituée d'un élastomère thermoplastique, qui est mise en oeuvre pour exercer une fonction d'étanchéité entre un élément de construction (14) du véhicule et une surface (15,15') d'une vitre (16) mobile par rapport à la bande d'étanchéité (11) ; et
(b) une seconde couche plus dure (13) qui est mise en oeuvre sous la forme d'un recouvrement visible pour au moins la partie la plus grande, sinon la partie visible, de la première couche (12), la première couche (12) et la seconde couche (13) étant collées l'une à l'autre sur pratiquement toute la longueur de la bande d'étanchéité (11), et l'utilisation étant **caractérisée en ce que** la seconde couche (13) est constituée d'un polyamide transparent ou translucide.

16. Utilisation selon la revendication 15, **caractérisée en ce qu'**une technologie d'extrusion, de moulage par injection ou de laminage, de préférence une technologie de co-extrusion ou une technologie de moulage par injection multicomposant est utilisée pour produire les bandes d'étanchéité (11).
